# EUROPEAN PATENT APPLICATION

(11) **EP 4 365 320 A1**
(43) Date of publication of application: **08.05.2024**
(21) Application number: 22869941.9
(22) Date of filing: 12.09.2022
(51) Int. Cl.: C21D 9/573, C22C 38/00, C22C 38/60, C21D 1/00, C21D 1/63

(54) **QUENCHING DEVICE, CONTINUOUS ANNEALING EQUIPMENT, QUENCHING METHOD, METHOD FOR MANUFACTURING STEEL SHEET, AND METHOD FOR MANUFACTURING PLATED STEEL SHEET**

(30) Priority: 16.09.2021 JP 2021150948
(71) Applicant: JFE Steel Corporation, Tokyo 100-0011 (JP)
(72) Inventor: YOSHIMOTO, Soshi, Tokyo 100-0011 (JP); KOBAYASHI, Hirokazu, Tokyo 100-0011 (JP)
(74) Representative: Haseltine Lake Kempner LLP
(86) International application number: PCT/JP2022/034060
(87) International publication number: WO 2023/042794

(57) **Abstract**

An object of the present invention is to provide a quenching apparatus, and a continuous annealing facility; and a quenching method, a method for manufacturing a steel sheet, and a method for manufacturing a coated steel sheet that, even when a metal sheet before quenching is already warped, enable suppression of occurrence of warpage in the metal sheet after being quenched.

A quenching apparatus 1 includes: a cooling device 10 including plural jet nozzles 12 from which a cooling fluid is sprayed onto a front surface and a back surface of a metal sheet S; and a flow rate adjustment device 30 that sets a flow rate of the cooling fluid that is sprayed from the jet nozzles 12 onto the front surface and the back surface of the metal sheet S based on the shape of the metal sheet S before quenching.

## Description

### Technical Field

The present invention relates to a quenching apparatus that performs quenching while continuously passing a metal sheet, a continuous annealing facility, a quenching method, a method for manufacturing a steel sheet, and a method for manufacturing a coated steel sheet.

### Background Art

In manufacture of metal sheets including steel sheets, a continuous annealing facility that performs annealing while continuously passing a metal sheet makes materials, for example, by heating and then cooling a metal sheet to promote phase transformation. In recent years, in the automobile industry, there has been an increasing demand for thinned high tensile steel sheets (Haiten) for achieving simultaneously the weight reduction and the crash safety of a vehicle body.

When a high tensile steel sheet is manufactured, a technique for cooling the steel sheet rapidly is important. For example, one of the techniques capable of cooling a steel sheet at the fastest rate is a water quenching method. In the water quenching method, a steel sheet is quenched as follows: a heated steel sheet is immersed in water, and, at the same time, cooling water is sprayed onto the steel sheet from a quenching nozzle provided in the water. When a steel sheet is quenched, there arises a problem that a defect in the shape of the steel sheet, such as warpage or wavelike deformation, may occur.

Various approaches have been proposed to prevent such a shape defect that occurs when a steel sheet is quenched (for example, refer to Patent Literatures 1 and 2). Patent Literature 1 discloses a structure in which, cooling water spray nozzles are installed in multiple stages in water into which a heated strip is immersed for water-cooling, and nozzle headers are disposed so as to be separated from one another in a travelling direction of the strip. This structure can prevent a lateral flow that occurs at existing multi-stage slit nozzles and can thus achieve uniform cooling in the width direction of the strip.

In addition, Patent Literature 2 discloses an approach of providing, at the front and the rear of a quenching part, bridle rolls serving as a tension changing unit that can change the tension applied to a steel sheet in a quenching process, for the purpose of suppressing wavelike deformation of a metal sheet that occurs during quenching at a continuous annealing furnace.

### Citation List

### Patent Literature

Patent Literature 1: Japanese Unexamined Patent Application Publication No. 59-153843
Patent Literature 2: Japanese Unexamined Patent Application Publication No. 2011-184773

### Summary of Invention

### Technical Problem

However, the method disclosed in Patent Literature 1 has a problem that an effect of shape correction is insufficient when a metal sheet before quenching is already warped. In addition, in the method disclosed in Patent Literature 2, a rupture in a metal sheet may be caused because a large tension is applied to a high-temperature metal sheet. There is a further problem that the shape of a metal sheet cannot be improved. This is because a great degree of thermal crown occurs in the bridle roll that is provided at the front of the quenching section and comes into contact with a high-temperature metal sheet, the bridle roll and the metal sheet are thereby in contact with one another nonuniformly in the width direction, and, as a result, the metal sheet buckles or has a flaw.

The present invention has been made to solve such problems, and an object thereof is to provide a quenching apparatus, and a continuous annealing facility; and a quenching method, a method for manufacturing a steel sheet, and a method for manufacturing a coated steel sheet that, even when a metal sheet before quenching is already warped, enable suppression of occurrence of warpage in the metal sheet after quenching.

### Solution to Problem

[1] A quenching apparatus that cools a metal sheet, including: a cooling device including plural jet nozzles from which a cooling fluid is sprayed onto a front surface and a back surface of the metal sheet; and a flow rate adjustment device that sets a flow rate of the cooling fluid that is sprayed from the jet nozzles onto the front surface and the back surface of the metal sheet based on a shape of the metal sheet before quenching, in which the flow rate adjustment device sets the flow rate relative to the back surface side of the metal sheet to be larger than the flow rate relative to the front surface side of the metal sheet when the metal sheet before quenching has a warp curving to the front surface side, and sets the flow rate relative to the front surface side of the metal sheet to be larger than the flow rate relative to the back surface side of the metal sheet when the metal sheet before quenching has a warp curving to the back surface side.
[2] The quenching apparatus according to the item [1], in which the shape of the metal sheet is measured by a shape measurement device that measures the shape of the metal sheet before being quenched.
[3] The quenching apparatus according to the item [2], in which the shape measurement device has a function of measuring a warpage quantity of the metal sheet, and the flow rate adjustment device sets a flow rate difference between the flow rate of the cooling fluid that is sprayed onto the front surface of the metal sheet and the flow rate of the cooling fluid that is sprayed onto the back surface of the metal sheet to increase with increasing the warpage quantity of the metal sheet.
[4] The quenching apparatus according to the item [3], in which the flow rate difference between the flow rate of the cooling fluid that is sprayed onto the front surface of the metal sheet and the flow rate of the cooling fluid that is sprayed onto the back surface of the metal sheet is less than 20 × d + 200 (m³/hr) where d (mm) represents the warpage quantity.
[5] The quenching apparatus according to any one of the items [2] to [4], in which the shape measurement device is constituted by a shape measurement roll on which the metal sheet before quenching passes through, and a distance between the shape measurement device and a start position of cooling performed by the cooling device is 0.5 m or more and 2.0 m or less.
[6] A continuous annealing facility including the quenching apparatus according to any one of the items [1] to [5] beside an exit of a soaking zone.
[7] A quenching method for cooling a metal sheet by spraying a cooling fluid onto a front surface and a back surface of the metal sheet from plural jet nozzles, the quenching method including, when setting a flow rate of the cooling fluid that is sprayed from the jet nozzles onto the front surface and the back surface of the metal sheet based on a shape of the metal sheet before quenching, setting the flow rate relative to the back surface side of the metal sheet to be larger than the flow rate relative to the front surface side of the metal sheet in a case where the metal sheet has a warp curving to the front surface side and setting the flow rate relative to the front surface side of the metal sheet to be larger than the flow rate relative to the back surface side of the metal sheet in a case where the metal sheet has a warp curving to the back surface side.
[8] The quenching method according to the item [7], further including: grasping, of the shape of the metal sheet, a warpage quantity of the metal sheet; and, when setting the flow rate of the cooling fluid, increasing a flow rate difference between the flow rate of the cooling fluid that is sprayed onto the front surface of the metal sheet and the flow rate of the cooling fluid that is sprayed onto the back surface of the metal sheet with increasing the warpage quantity of the metal sheet.
[9] The quenching method according to the item [8], in which the flow rate difference between the flow rate of the cooling fluid that is sprayed onto the front surface of the metal sheet and the flow rate of the cooling fluid that is sprayed onto the back surface of the metal sheet is less than 20 × d + 200 (m³/hr) where d (mm) represents the warpage quantity.
[10] A method for manufacturing a steel sheet, the method including, by using the quenching method according to any one of the items [7] to [9], quenching a steel sheet that is the metal sheet.
[11] A method for manufacturing a coated steel sheet, the method including performing a coating treatment on a steel sheet manufactured by using the method according to the item [10] .
[12] The method for manufacturing a coated steel sheet, according to the item [11], in which the coating treatment is any one of a hot-dip zinc coating treatment, an electro zinc coating treatment, and a hot-dip zinc coating and alloying treatment.

### Advantageous Effects of Invention

According to the present invention, the flow rate of the cooling fluid that is sprayed onto the front surface and the flow rate of the cooling fluid that is sprayed onto the back surface are adjusted according to the shape of the metal sheet. Thus, in the case where quenching is performed while the metal sheet is continuously passed, even when the metal sheet before quenching is warped, warpage can be suppressed from occurring in the metal sheet after being quenched.

### Brief Description of Drawings

[Fig. 1] Fig. 1 is a schematic view of a quenching apparatus according to an embodiment of the present invention.
[Fig. 2] Fig. 2 is a schematic view illustrating an example of the definition of a warpage quantity of a metal sheet.

### Description of Embodiments

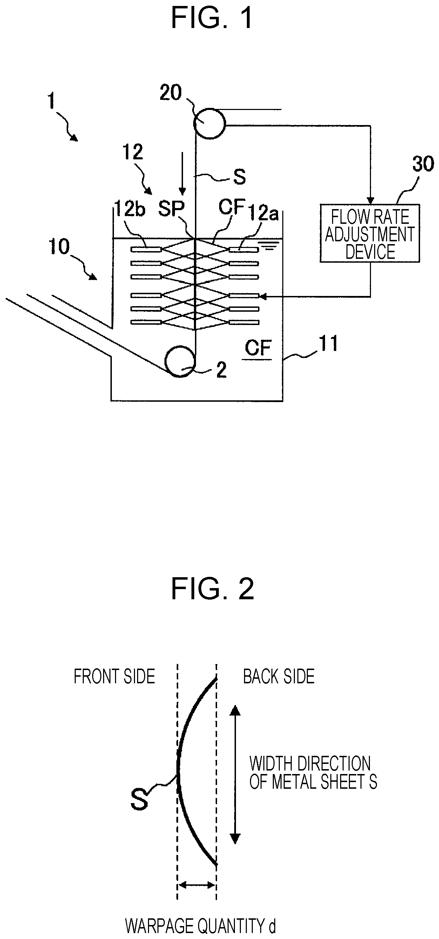

Embodiments of the present invention will be described based on the drawings. Fig. 1 is a schematic view of an example of a quenching apparatus according to an embodiment of the present invention. Note that such a quenching apparatus 1 of Fig. 1 performs quenching of, for example, as a metal sheet S, a steel material and is applied to a cooling facility provided beside an exit of a soaking zone of a continuous annealing furnace. The quenching apparatus 1 of Fig. 1 includes a cooling device 10 that cools the metal sheet S. The cooling device 10 is a device for cooling a metal sheet with refrigerant CF and includes: a cooling tank 11 storing the refrigerant CF; and plural jet nozzles 12 that are installed in the cooling tank 11 and from which the refrigerant CF is sprayed onto a front surface and a back surface of the metal sheet S.

The cooling tank 11 stores therein water serving as the refrigerant CF, and the metal sheet S, for example, enters to be immersed in the water from the upper side of the cooling tank 11 in a sheet passing direction. The refrigerant CF in the cooling tank 11 is kept at a water temperature suitable for quenching. For example, the water temperature in the cooling tank 11 is preferably more than 0°C and 50°C or less, particularly preferably 10°C or more and 40°C or less. After a portion of the refrigerant CF in the cooling tank 11 is sent to a cooling facility such as an external cooling tower and is then cooled, the refrigerant CF after the cooling is returned into the cooling tank 11, and the water temperature in the cooling tank 11 is thereby prevented from rising. Note that a sink roll 2 for changing the sheet passing direction of the metal sheet S is installed in the cooling tank 11.

The plural jet nozzles 12 are installed beside both surfaces of the metal sheet and arranged in the sheet passing direction of the metal sheet S. Consequently, the metal sheet S is cooled by the refrigerant CF stored in the cooling tank 11 and by the refrigerant CF sprayed from the plural jet nozzles 12. The plural jet nozzles 12 include plural back-side jet nozzles 12a through which the refrigerant is sprayed onto the metal sheet S from the back surface side of the metal sheet S to perform rapid cooling and plural front-side jet nozzles 12b through which the refrigerant CF is sprayed onto the metal sheet S from the front surface side of the metal sheet S to perform rapid cooling. Each of the plural back-side jet nozzles 12a and the plural front-side jet nozzles 12b can independently adjust the flow rate of the refrigerant CF to be sprayed.

The plural back-side jet nozzles 12a and the plural front-side jet nozzles 12b are connected to pipes, which are not illustrated, and the refrigerant CF in the cooling tank 11 is pumped up into the pipes and is pressure-fed to the plural back-side jet nozzles 12a and the plural front-side jet nozzles 12b. High-pressure water is then jetted out of the plural back-side jet nozzles 12a and the plural front-side jet nozzles 12b through opening parts thereof. The plural back-side jet nozzles 12a and the plural front-side jet nozzles 12b are desirably arranged beside the front surface and the back surface of the metal sheet S in a symmetrical manner and are each preferably a slit nozzle to obtain a more uniform cooling capacity in the width direction.

As Fig. 1 illustrates, cooling the metal sheet S by using both the cooling tank 11 and the plural jet nozzles 12 stabilizes the boiling state of the surfaces of the metal sheet S and enables a uniform shape control. Note that, although the case where the cooling device 10 includes the cooling tank 11 and the plural jet nozzles 12 is illustrated in Fig. 1, the cooling tank 11 may be omitted when the plural jet nozzles 12 are provided. In addition, although the case of water quenching using water serving as the refrigerant CF is illustrated, oil cooling using oil serving as the refrigerant CF may alternatively be adopted. The fluid that is stored in the cooling tank 11 and jets from the jet nozzles 12 may be any cooling fluid such as the refrigerant CF. Moreover, although the case where the plural jet nozzles 12 are installed in the cooling tank 11 is illustrated in Fig. 1, the cooling method is not limited thereto and may be any approach enabling cooling of the metal sheet S in a desired temperature range.

Here, when the metal sheet S before quenching is already warped, the metal sheet S after quenching may remain warped, or, even worse, quenching the warped metal sheet S may worsen the warpage. Thus, it is desired to correct, through quenching, the warpage of the metal sheet S before being quenched, in addition to the desire to suppress warpage of the metal sheet S after quenching from occurring. Accordingly, the quenching apparatus 1 of Fig. 1 is designed to set the cooling capacity for each of the front surface and the back surface of the metal sheet S according to the shape of the metal sheet S before quenching. Here, the "shape" of the metal sheet S includes a "warpage direction" and a "warpage quantity". The "warpage direction" has the same meaning as an "outward-curving warped shape" of the metal sheet S.

A method for grasping the shape of the metal sheet S before being quenched is not specifically limited and may be any method enabling a grasp of the warpage direction and the warpage quantity of the metal sheet S. The shape of the metal sheet S before quenching may be calculated, based on the shape measured at any position in a path through which the metal sheet before quenching passes, by using a physical model including an annealing condition of the metal sheet S until just before quenching and a transport condition of the metal sheet S. In addition, the shape of the metal sheet S before quenching may be predicted by using a prediction model using a machine learning model. A shape measurement device may be provided just before quenching to measure the shape of the metal sheet S.

In addition, based on the "warpage direction" and the "warpage quantity" obtained through the measurement of the shape of the metal sheet S (leading material) after being quenched, the shape of a following material before quenching may be estimated. Specifically, an influence of the warp existing before quenching may be judged to be present when the measured warpage quantity of the metal sheet S (leading material) after quenching is larger than the average of the past manufacturing results (the warpage quantities after quenching), and the warpage quantity and the warpage direction of the metal sheet S (following material) before quenching may be estimated. Relative to the front surface and the back surface of the following material subjected to the estimation, the flow rates of the plural jet nozzles 12 may be adjusted.

Here, when the degree of warpage of the metal sheet S before quenching can be quantitively grasped, as described below, a flow rate difference between the flow rate of the cooling fluid jetting from the back-side jet nozzles 12a and the flow rate of the cooling fluid jetting from the front-side jet nozzles 12b may be determined based on the grasped warpage quantity. Note that, when the degree of warpage of the metal sheet S before quenching cannot be quantitively grasped, the flow rate of the cooling fluid from the back-side jet nozzles 12a and the flow rate of the cooling fluid from the front-side jet nozzles 12b may be determined based on the data of the past manufacturing results including the flow rate differences between of the cooling fluid jetting from the back-side jet nozzles 12a and the cooling fluid jetting from the front-side jet nozzles 12b and the warpage quantities of the metal sheet S after quenching (more flattened shape) corresponding to the flow rate differences. In addition, the warpage direction of the metal sheet S before quenching tends to reflect the shape of a base sheet positioned on the entrance side of the continuous annealing furnace; thus, when, for example, a warped shape of the base sheet can be detected in advance, the flow rates relative to the front surface and the back surface may be adjusted based on the information.

Hereinafter, an embodiment using a shape measurement device to grasp the shape of the metal sheet S will be described. The quenching apparatus 1 of Fig. 1 includes a shape measurement device 20 having a function of measuring the shape of a metal sheet before being quenched and a flow rate adjustment device 30 that sets a flow rate of the refrigerant CF that is sprayed from the jet nozzles 12 onto the front surface and the back surface of the metal sheet S based on the shape of the metal sheet S measured by the shape measurement device 20. The shape measurement device 20 is constituted by, for example, a shape measurement roll, and a product called a BFI shape roll from Friedrich Vollmer Feinmessgeraetebau GmbH can specifically be used. Plural piezoelectric sensors are provided in the shape measurement device 20 in the width direction, and the metal sheet S can be measured by being passed through on the shape measurement device 20. The shape measurement device 20 is a device that measures, as the shape of the metal sheet S, the warpage direction of the metal sheet S before quenching, preferably the warpage direction and the warpage quantity.

The distance between the shape measurement device 20 and a cooling start point SP is preferably 0.5 m or more and 2.0 m or less. Shape measurement is preferably performed at a spot as close to the cooling start point as possible; however, a distance of less than 0.5 m is undesired because there is concern that, for example, interference with the cooling device or slipping of the shape measurement roll due to scattering of the cooling fluid may occur. On the other hand, when the distance is more than 2.0 m, the warpage is likely to change between the measurement of the warpage and the start of cooling; thus, such settings of the distance need to be avoided. Although the case where the shape measurement device 20 is constituted by the shape measurement roll is illustrated in Fig. 1, this is not the only option, and the shape of the metal sheet S before quenching may be measured by using a known technique such as measurement with a camera or laser measurement. Note that the distance between the shape measurement device 20 and the cooling start point SP is specifically the distance from a point on the shape measurement device at which the metal sheet S is measured to the cooling start point SP. When the shape of the metal sheet S is predicted, the shape of the metal sheet S at a position as close to the cooling start point SP as possible is also preferably predicted.

The flow rate adjustment device 30 sets, according to the shape of the metal sheet S, a spray quantity of the refrigerant CF that is sprayed from the back-side jet nozzles 12a and a spray quantity of the refrigerant CF that is sprayed from the front-side jet nozzles 12b. When the flow rate of the cooling fluid jetting from each of the back-side jet nozzles 12a and the front-side jet nozzles 12b is controlled by the pump as described above, the flow rate adjustment device 30 controls the flow rate of the cooling fluid by controlling an operation of the pump. Note that the spray quantity of the refrigerant CF from each of the back-side jet nozzles 12a and the front-side jet nozzles 12b is preferably 200 m³/hr or more in the case of water quenching. This is because, when the spray quantity is less than 200 m³/hr, a vapor film generated on a cooled surface of the metal sheet S cannot be sufficiently removed.

When the metal sheet S before quenching has a warp curving to the front surface side, the flow rate adjustment device 30 sets the flow rate of the back-side jet nozzles 12a beside the back surface of the metal sheet S to be larger than the flow rate of the front-side jet nozzles 12b beside the front surface of the metal sheet S. On the other hand, when the metal sheet S before quenching has a warp curving to the back surface side, the flow rate adjustment device 30 sets the flow rate of the front-side jet nozzles 12b beside the front surface of the metal sheet to be larger than the flow rate of the back-side jet nozzles 12a beside the back surface of the metal sheet.

In a continuous annealing facility, a tension is applied in the transport direction of the metal sheet S. Thus, when a change is made such that the cooling rate varies between the front side and the back side of the metal sheet S, the strongly cooled surface side is warped so as to curve outward after cooling. This phenomenon results from that a residual stress exerted in a tensile direction on the strongly cooled surface side and a residual stress exerted in a compression direction on the weakly cooled surface side are generated because, when the strongly cooled surface side thermally contracts to a larger extent, the strongly cooled surface side receives, from the weakly cooled surface, a tensile stress exerted in the width direction. Due to the residual stresses, the strongly cooled surface side tends to be warped so as to curve outward after completion of the cooling.

By using such tendency, when a steel sheet before quenching is already warped, the cooling rate relative to a surface on the side on which the warp curves inward is set larger than the cooling rate relative to a surface on the side on which the warp curves outward. Thus, even when the metal sheet S before quenching is already warped, the shape of the metal sheet S after quenching can be controlled to be flat. Accordingly, after the shape of the warpage of the metal sheet S is grasped, the flow rate of the cooling fluid jetting from the nozzles installed beside the surface on the side on which the warp curves inward is increased, and the warpage can thereby be improved.

Fig. 2 is a schematic view illustrating the definition of a warpage quantity d. In the flow rate adjustment device 30, the warpage quantity d in addition to the warpage direction is preferably reflected in the spray quantity of the refrigerant CF. The flow rate adjustment device 30 increases the flow rate difference between the cooling fluid that is sprayed onto the front surface of the metal sheet S and the cooling fluid that is sprayed onto the back surface of the metal sheet S with increasing the warpage quantity d of the metal sheet S. For example, the relationship between the warpage quantity d and the flow rate difference is preset in the flow rate adjustment device 30, and, according to the measured warpage direction and warpage quantity d, the flow rate of the refrigerant CF to jet from the back-side jet nozzles 12a and the flow rate of the refrigerant CF to jet from the front-side jet nozzles 12b are set.

Specifically, 0 ≤ Q < 20d + 200 is preferably given relative to a value d, where d (mm) represents the warpage quantity of the warpage that has occurred before quenching, and Q (m³/hr) represents the flow rate difference of the cooling fluid during cooling. Here, Q = 0 (m³/hr) is based on that the spray flow rates relative to the front side and the back side may be made equal to one another in the case where no warpage is measured or predicted. On the other hand, in a case where the flow rate difference Q is 20d + 200 (m³/hr) or more, the metal sheet starts warping in the opposite direction to the direction of the warpage existing before cooling due to a difference in the cooling capacity resulting from the flow rate difference. Relative to the warpage quantity d (mm) before cooling starts, already existing warpage is improved with 10d (m³/hr). Further, in a case of a steel sheet, warpage that occurs during cooling is about 10 mm. Therefore, 0 ≤ Q ≤ 10d + 100 (m³/hr) is practically preferable.

A quenching method and a method for manufacturing a steel sheet of the present invention will be described with reference to Fig. 1. First, the shape of the metal sheet S before quenching, that is, the warpage direction and the warpage quantity d thereof are grasped. In the flow rate adjustment device 30, the flow rates of the front-side jet nozzles 12b and the back-side jet nozzles 12a according to the shape of the metal sheet S are set. The metal sheet (steel sheet) is then cooled by the cooling device 10 while being transported, and the metal sheet S is thus quenched. Specifically, the flow rate of the back-side jet nozzles 12a is set larger than the flow rate of the front-side jet nozzles 12b when there is a warp curving to the front surface side, and the flow rate of the front-side jet nozzles 12b is set larger than the flow rate of the back-side jet nozzles 12a when the metal sheet S before quenching has a warp curving to the back surface side. Furthermore, the flow rate difference thereof is determined depending on the warpage quantity d.

According to the above-described embodiment, the shape of the metal sheet S before quenching is grasped, and, according to the shape of the metal sheet S, the flow rate of the cooling fluid that is sprayed onto the front surface and the flow rate of the cooling fluid that is sprayed onto the back surface are set. Thus, in the case where the metal sheet S is quenched while being continuously transported, even when the metal sheet before quenching is warped, further warpage during quenching is suppressed, and warpage can be suppressed from occurring in the metal sheet after being quenched.

In the quenching of a metal sheet of the related art, when the metal sheet before quenching is already warped, the quenching further develops the warpage of the metal sheet. When warpage already occurs before quenching, the bending moment applied to the metal sheet through quenching acts so as to further develop the warpage because there is a resistance against a direction where the warpage is reduced. Thus, the warpage direction of the metal sheet before quenching and the warpage direction of the metal sheet after quenching are the same, and the warpage quantity becomes larger than before the quenching.

In the quenching of the related art, warpage occurring before quenching is not considered, and it is thus ideal to cool uniformly surfaces of a steel sheet to be cooled, that is, the front surface and the back surface. However, when occurrence of warpage is grasped in advance, it is possible to take measures for correcting the warpage according to the warpage. Thus, attention is given to the possibility that, by grasping warpage, the cooling rate during the subsequent quenching is controlled to enable warpage correction, the shape of the metal sheet S before quenching is grasped, and the flow rates of the cooling fluid that is sprayed onto the front surface and the cooling fluid that is sprayed onto the back surface are set according to the shape of the metal sheet S. Consequently, even when the metal sheet S before quenching is warped, the warpage of the metal sheet after quenching can be suppressed from occurring.

Specifically, according to the present invention, it is possible to reduce intricacy, nonuniformity, and unevenness in a shape generated when a microstructure expands in volume due to martensitic transformation caused during the rapid cooling of the metal sheet S. Thus, when the metal sheet S is a high strength steel sheet (Haiten), an effect of suppressing deformation is increased. Specifically, the quenching apparatus 1 is preferably applied to the quenching for the metal sheet S that is a high strength steel sheet. More specifically, the quenching apparatus 1 is preferably applied to the manufacture of a steel sheet having a tensile strength of 580 MPa or more. The upper limit of the tensile strength may be, for example, but not particularly limited to, 2000 MPa or less. Examples of the above-described high strength steel sheet (Haiten) include a high strength cold rolled steel sheet, a hot-dip galvanized steel sheet (hot-dip zinc coated steel sheet) made of the high strength cold rolled steel sheet subjected to a surface treatment (coating treatment), an electro-galvanized steel sheet (electro zinc coated steel sheet), and a galvannealed steel sheet (alloyed hot-dip zinc coated steel sheet). Specific examples of the composition of the high strength steel sheet include an example where, in mass%, C is 0.04% or more and 0.35% or less, Si is 0.01% or more and 2.50% or less, Mn is 0.80% or more and 3.70% or less, P is 0.001% or more and 0.090% or less, S is 0.0001% or more and 0.0050% or less, and sol.Al is 0.005% or more and 0.065% or less; at least one of Cr, Mo, Nb, V, Ni, Cu, and Ti is each 0.5% or less, as required; B and Sb are each 0.01% or less, as further required; the remaining includes Fe and incidental impurities. Note that the embodiments of the present invention are not limited to the example where a steel sheet is quenched and are applicable to quenching for any metal sheet other than a steel sheet.

### EXAMPLE

A practical example of the present invention will be described. In Present examples 1 to 14, a high tensile cold rolled steel sheet having a thickness of 1.0 mm and a width of 1000 mm and whose tensile strength is in the 1470-MPa class was manufactured as the metal sheet S by using the quenching apparatus 1 of Fig. 1. In addition, the high tensile cold rolled steel sheet, whose tensile strength is in the 1470-MPa class, has a composition where, in mass%, C is 0.20%, Si is 1.0%, Mn is 2.3%, P is 0.005%, and S is 0.002%. Water served as the refrigerant CF, and the temperature of the water was 30°C.

On the other hand, in Comparative examples 1 to 6, the above-described high tensile cold rolled steel sheet was manufactured by using the quenching apparatus described in Patent Literature 1, but here, the other conditions are the same as those of the present examples. The relationship between the warpage quantity of the metal sheet S before quenching and the warpage quantity of the metal sheet S after quenching in each of Present examples 1 to 12 and Comparative examples 1 to 6 was measured. In Present examples 13 and 14, the "warpage direction" and the "warpage quantity" of the metal sheet S before quenching were not measured but were estimated to conduct the examples. Note that the definition of the warpage quantity is illustrated in Fig. 2, and, in Present examples 1 to 12 and Comparative examples 1 to 6, it was judged that warpage suppression was achieved when the warpage quantity of the metal sheet S after quenching was less than or equal to the warpage quantity before quenching. In addition, in Present examples 13 and 14, it was judged that warpage suppression was achieved when the warpage quantity of the metal sheet S (following material) after quenching was less than or equal to the warpage quantity of the metal sheet S (leading material) after quenching. The warpage quantities of Present examples 1 to 14 and Comparative examples 1 to 6 are given in Table 1 below.

**[Table 1]**

| | Metal sheet before quenching | | Flow rate of water jet nozzle (m³/hr) | | Flow rate difference Q (m³/hr) | Metal sheet after quenching | |
|---|---|---|---|---|---|---|---|
| | Warpage direction (Outward-curving direction) | Warpage quantity d (mm) | Front side | Back side | | Warpage direction (Outward-curving direction) | Warpage quantity d (mm) |
| Present example 1 | Front | 10 | 500 | 600 | 100 | Front | 10 |
| Present example 2 | Front | 10 | 500 | 700 | 200 | - | 0 |
| Present example 3 | Front | 20 | 500 | 700 | 200 | Front | 10 |
| Present example 4 | Front | 20 | 500 | 800 | 300 | - | 0 |
| Present example 5 | Front | 30 | 500 | 800 | 300 | Front | 10 |
| Present example 6 | Front | 30 | 500 | 900 | 400 | - | 0 |
| Present example 7 | Back | 10 | 600 | 500 | 100 | Back | 10 |
| Present example 8 | Back | 10 | 700 | 500 | 200 | - | 0 |
| Present example 9 | Back | 20 | 700 | 500 | 200 | Back | 10 |
| Present example 10 | Back | 20 | 800 | 500 | 300 | - | 0 |
| Present example 11 | Back | 30 | 800 | 500 | 300 | Back | 10 |
| Present example 12 | Back | 30 | 900 | 500 | 400 | - | 0 |
| Present example 13 | Front* | 15* | 500 | 650 | 150 | Front | 20⇒10 |
| Present example 14 | Back* | 5* | 550 | 500 | 50 | Back | 10⇒5 |
| Comparative example 1 | Front | 10 | 500 | 500 | 0 | Front | 20 |
| Comparative example 2 | Front | 20 | 500 | 500 | 0 | Front | 30 |
| Comparative example 3 | Front | 30 | 500 | 500 | 0 | Front | 40 |
| Comparative example 4 | Back | 10 | 500 | 500 | 0 | Back | 20 |
| Comparative example 5 | Back | 20 | 500 | 500 | 0 | Back | 30 |
| Comparative example 6 | Back | 30 | 500 | 500 | 0 | Back | 40 |

| | | | | | | | |
|---|---|---|---|---|---|---|---|
| Note 1: "*" denotes an estimated value. Note 2: An "underlined number" denotes the warpage quantity of a leading material after quenching. A numerical value after "=>" denotes the warpage quantity of a following material after quenching. | | | | | | | |

As given in Table 1, in Present examples 1 to 14, even when the metal sheet S before quenching was already warped, suppression of occurrence of warpage in the metal sheet S after being quenched was achieved. Specifically, as in Present examples 2, 4, 6, 8, 10, and 12, when the flow rate difference was given according to the warpage quantity d in addition to the warpage direction, a reduction in the warpage of the metal sheet S before quenching to 0 mm was achieved after quenching. On the other hand, in Comparative examples 1 to 6, when the metal sheet S before quenching was already warped, the warpage of the metal sheet S after quenching was developed.

In Present examples 13 and 14, the shape of the metal sheet S (following material) before quenching was estimated through, on a camera display, a visual review of the warpage direction and the warpage quantity of the metal sheet S (leading material) after being quenched. Specifically, the measurement of the warpage quantity of the metal sheet S (leading material) after being quenched was conducted as follows: the position where the warpage quantity was a maximum was detected through image analysis with images shot from edge sides of the metal sheet S (the sides of both ends in the width direction), and matching to the real scale was performed. In comparison with the average of the past manufacturing results (the warpage quantities after quenching), when the measured warpage quantity was larger, the presence of a warp in the shape of the metal sheet S before quenching was judged. Further, when the "presence of a warp" was judged, the warpage quantity before quenching was estimated based on the deviation between the average of the past manufacturing results (the warpage quantities after quenching) and the measured warpage quantity. Thus, it is preferable that manufacturing results are collected in advance, and the correlation between the deviation between the average of the manufacturing results (the warpage quantities after quenching) and the measured warpage quantity and the warpage quantity before quenching is grasped in advance. In addition, the warpage direction of the metal sheet S (following material) was estimated based on the warpage direction of the metal sheet S (leading material) on the assumption that the warpage direction of the metal sheet S is the same before and after quenching.

It was confirmed that adjusting the spray flow rates relative to the front surface and the back surface of the metal sheet S (following material) based on the estimated "warpage direction" and "warpage quantity" of the metal sheet S (following material) before quenching can improve the warpage quantity of the after-quenching following material under the same condition. Note that the warpage quantity before quenching is not largely changed in the longitudinal direction in the same coil under the same manufacturing condition; thus, it was confirmed that the warpage quantity after quenching can be improved by, while checking the warpage quantity after quenching, judging the presence or absence of a warped shape and judging the warpage direction and the warpage quantity before quenching and then by adjusting the spray flow rates relative to the front surface and the back surface of the metal sheet S.

The present examples include the examples where the warpage quantity after quenching is made to 0 mm; however, when the permissible range of the warpage quantity of one surface (the front surface or the back surface) of the metal sheet S is narrow due to, for example, the facility convenience of the sheet passing path, adjustment of the warpage direction, such as changing the warpage direction to the side of the other surface (the back surface or the front surface), is possible.

### Reference Signs List

- 1: quenching apparatus
- 10: cooling device
- 11: cooling tank
- 12: jet nozzle
- 12a: back-side jet nozzle
- 12b: front-side jet nozzle
- 20: shape measurement device
- 30: flow rate adjustment device
- CF: refrigerant
- S: metal sheet (steel sheet)
- SP: cooling start point
- d: warpage quantity

## Claims

1. A quenching apparatus that cools a metal sheet, comprising:
a cooling device including a plurality of jet nozzles from which a cooling fluid is sprayed onto a front surface and a back surface of the metal sheet; and
a flow rate adjustment device that sets a flow rate of the cooling fluid that is sprayed from the jet nozzles onto the front surface and the back surface of the metal sheet based on a shape of the metal sheet before quenching, wherein
the flow rate adjustment device sets the flow rate relative to the back surface side of the metal sheet to be larger than the flow rate relative to the front surface side of the metal sheet when the metal sheet before quenching has a warp curving to the front surface side, and sets the flow rate relative to the front surface side of the metal sheet to be larger than the flow rate relative to the back surface side of the metal sheet when the metal sheet before quenching has a warp curving to the back surface side.

2. The quenching apparatus according to Claim 1, wherein
the shape of the metal sheet is measured by a shape measurement device that measures the shape of the metal sheet before being quenched.

3. The quenching apparatus according to Claim 2, wherein
the shape measurement device has a function of measuring a warpage quantity of the metal sheet, and
the flow rate adjustment device sets a flow rate difference between the flow rate of the cooling fluid that is sprayed onto the front surface of the metal sheet and the flow rate of the cooling fluid that is sprayed onto the back surface of the metal sheet to increase with increasing the warpage quantity of the metal sheet.

4. The quenching apparatus according to Claim 3, wherein
the flow rate difference between the flow rate of the cooling fluid that is sprayed onto the front surface of the metal sheet and the flow rate of the cooling fluid that is sprayed onto the back surface of the metal sheet is less than 20 × d + 200 (m³/hr) where d (mm) represents the warpage quantity.

5. The quenching apparatus according to any one of Claims 2 to 4, wherein
the shape measurement device is constituted by a shape measurement roll on which the metal sheet before quenching passes through, and
a distance between the shape measurement device and a start position of cooling performed by the cooling device is 0.5 m or more and 2.0 m or less.

6. A continuous annealing facility comprising
the quenching apparatus according to any one of Claims 1 to 5 beside an exit of a soaking zone.

7. A quenching method for cooling a metal sheet by spraying a cooling fluid onto a front surface and a back surface of the metal sheet from a plurality of jet nozzles, the quenching method comprising,
when setting a flow rate of the cooling fluid that is sprayed from the jet nozzles onto the front surface and the back surface of the metal sheet based on a shape of the metal sheet before quenching, setting the flow rate relative to the back surface side of the metal sheet to be larger than the flow rate relative to the front surface side of the metal sheet in a case where the metal sheet has a warp curving to the front surface side, and setting the flow rate relative to the front surface side of the metal sheet to be larger than the flow rate relative to the back surface side of the metal sheet in a case where the metal sheet has a warp curving to the back surface side.

8. The quenching method according to Claim 7, further comprising:
grasping, of the shape of the metal sheet, a warpage quantity of the metal sheet; and,
when setting the flow rate of the cooling fluid, increasing a flow rate difference between the flow rate of the cooling fluid that is sprayed onto the front surface of the metal sheet and the flow rate of the cooling fluid that is sprayed onto the back surface of the metal sheet with increasing the warpage quantity of the metal sheet.

9. The quenching method according to Claim 8, wherein
the flow rate difference between the flow rate of the cooling fluid that is sprayed onto the front surface of the metal sheet and the flow rate of the cooling fluid that is sprayed onto the back surface of the metal sheet is less than 20 × d + 200 (m³/hr) where d (mm) represents the warpage quantity.

10. A method for manufacturing a steel sheet, the method comprising,
by using the quenching method according to any one of Claims 7 to 9, quenching a steel sheet that is the metal sheet.

11. A method for manufacturing a coated steel sheet, the method comprising
performing a coating treatment on a steel sheet manufactured by using the method according to Claim 10.

12. The method for manufacturing a coated steel sheet, according to Claim 11, wherein
the coating treatment is any one of a hot-dip zinc coating treatment, an electro zinc coating treatment, and a hot-dip zinc coating and alloying treatment.
